# EUROPÄISCHE PATENTSCHRIFT

(11) **EP 1 466 990 B1**
(45) Veröffentlichungstag und Bekanntmachung des Hinweises auf die Patenterteilung: **03.01.2007**
(21) Anmeldenummer: 04007419.7
(22) Anmeldetag: 26.03.2004
(51) Int. Cl.: C21D 9/00, F16B 25/00

(54) **Schraube mit einer partiell gehärteten Funktionsspitze und Verfahren zu ihrer Herstellung**
Screw with a partially hardened point and process for making same
Vis ayant une pointe durcie partiellement et procédé pour sa fabrication

(30) Priorität: 08.04.2003 DE 10315957
(43) Veröffentlichungstag der Anmeldung: 13.10.2004
(73) Patentinhaber: EJOT GmbH & Co. KG, 57334 Bad Laasphe (DE)
(72) Erfinder: Friederich, Heinrich, Dr., 68649 Gross-Rohrheim (DE); Homrighausen, Christof, 57319 Bad Berleburg (DE)
(74) Vertreter: Eisenführ, Speiser & Partner

(56) Entgegenhaltungen:
- DE-A- 2 211 608
- US-A- 4 021 274
- US-A- 5 755 542
- PATENT ABSTRACTS OF JAPAN Bd. 2002, Nr. 09, 4. September 2002 (2002-09-04) & JP 2002 130417 A (THK CO LTD), 9. Mai 2002 (2002-05-09)
- PATENT ABSTRACTS OF JAPAN Bd. 0090, Nr. 74 (C-273), 3. April 1985 (1985-04-03) & JP 59 208022 A (NTN TOYO BEARING KK), 26. November 1984 (1984-11-26)

## Beschreibung

Die Erfindung betrifft ein Verfahren zur Herstellung einer aus einem niedriglegierten Kohlenstoffstahl bestehenden Schraube mit einem Kopf, einem anschließenden Halteabschnitt und einer Funktionsspitze, die im Außenbereich von begrenzter radialer Tiefe eine dem Halteabschnitt gegenüber größere Härte aufweist, wobei der Schraubenkörper durch Pressen und Walzen geformt und anschließend die Funktionsspitze einem Härtungsvorgang unterworfen wird (US-A-5.755.542). Sie betrifft ferner eine derartige Schraube.

Zur Herstellung der aus der DE-PS 22 11 608 bekannten gewindeformenden Schraube, bei der die größere Gewindehärte auf den gewindeformenden Abschnitt beschränkt ist und sich in den Gewindekern erstreckt, wird die gehärtete Gewindezone durch Erwärmen in einer Induktionsspule und anschließendes Abschrecken erzeugt. Nur so lässt sich die vom Stand der Technik erstrebte, über den Umfang umlaufend gleichmäßige Härtung erzielen. Das hat jedoch einen intermittierenden Verfahrensablauf mit umständlicher Manipulation jeder einzelnen Schraube zur Folge. Deshalb bleibt auch die Energie-Übertragungsrate hinter den Möglichkeiten zurück, und es kommt überdies infolge Wärmeleitung zu einer zusätzlichen Härtung des Kerns in dessen Außenbereich, obgleich die vom Pressen des Kopfes und Walzen des Gewindes verursachte Kernhärtung ausreicht und die zusätzliche Härtung die wasserstoffinduzierte Sprödbruchanfälligkeit der Schraube erhöht. Schließlich ist auch in axialer Richtung die gehärtete Zone verhältnismäßig lang; weil diese aber nicht im haltenden Bauteil verbleiben darf, sondern hindurchgeschraubt werden muss und herausragt, tritt eine in Achsrichtung lange Funktionsspitze besonders störend in Erscheinung.

Dem will die Erfindung abhelfen. Sie besteht, ausgehend von dem eingangs geschilderten Verfahren, darin, dass die Härtung durch momentanes Erwärmen bei hohem Energietransfer und anschließendem Abschrecken erfolgt sowie auf Teilbereiche des Umfangs der Funktionsspitze beschränkt wird. Diesen Maßnahmen liegt die Erkenntnis zugrunde, dass die Wirkung der Funktionsspitze der Schraube praktisch nicht beeinträchtigt wird, wenn sich ihre Härte nicht über ihren gesamten Umfang, sondern nur über Teilbereiche des Umfangs erstreckt, während andere Umfangsteilbereiche der Funktionsspitze ihre Grundfestigkeit beibehalten. Damit wird zugleich die Möglichkeit eröffnet, eine solche Härtung im Durchlaufverfahren vorzunehmen, was den Herstellvorgang wesentlich vereinfacht und verbilligt. Auch kann die Härtung auf einen kurzen Längenabschnitt des Gewindes konzentriert werden, so dass im Einbauzustand nur eine entsprechend kurze Funktionsspitze hervorsteht.

Die Kurzzeit-Ausstenitisierung niedrig legierten Kohlenstoffstahls zur partiellen Härtung bestimmter Bauteil-Abschnitte ist an sich bekannt, nicht jedoch die vorstehend beschriebene besondere Art der Anwendung einer solchen Maßnahme.

Das Erwärmen der Funktionsspitze über Teilbereiche ihres Umfangs kann induktiv bei linearem Quervorschub der Schraube durch einen Linieninduktor erfolgen. Besonders vorteilhaft ist jedoch - wegen des noch schnelleren Energietransfers und entsprechend geringerer Wärmeleitung zum Schraubenkern hin - die Beaufschlagung mittels Laserstrahl. In diesem Fall können mehrere Laserstrahlen auf Umfangsabschnitte der Funktionsspitze der Schraube gerichtet werden.

Auch das lokale Laserhärten ist an sich bekannt, wie sich beispielsweise aus der DE 198 53 733 C1 oder der EP 0 130 749 B1 ergibt; jedoch nicht bei Schrauben und in der besonderen Ausgestaltung des vorliegenden Verfahrens.

Der Schraubenkörper kann vor dem partiellen Härten der Funktionsspitze insgesamt vergütet oder einsatzgehärtet werden. Die Vergütung erfolgt durch Erwärmen auf Austenitisierungstemperatur, Abschrecken und Anlassen, die Einsatzhärtung durch Aufkohlen oder Carbonitrieren während der Erwärmung auf Austenitisierungstemperatur, worauf wiederum Abschrecken und Anlassen folgen.

Vorzugsweise wird die umfangsbeschränkte Härtung radial auf die Spitzen und auf Flankenabschnitte der gewindeformenden Gewindegänge der Funktionsspitze beschränkt. Sofern die Funktionsspitze auch Schneidkanten zum Vorbohren oder Fließlochformen aufweist, wird vorteilhaft die Härtung auf die Schneidkanten der bohrlochformenden Abschnitte der Funktionsspitze beschränkt. In allen Fällen kann vorteilhaft die radiale Tiefe der die vergrößerte Härtung hervorrufenden momentanen Erwärmung in axialer Richtung vom Beginn der Funktionsspitze zum Kopf hin verringert werden.

Gegenstand der Erfindung ist demgemäß auch eine aus einem niedriglegierten Kohlenstoffstahl bestehende Schraube mit einem Kopf, einem anschließenden Halteabschnitt und einer Funktionsspitze, die im Außenbereich von begrenzter radialer Tiefe einer dem Halteabschnitt gegenüber größere Härte aufweist, und die sich dadurch auszeichnet, dass nur Umfangsteilbereiche der Funktionsspitze gehärtet sind. Besonders vorteilhaft ist nicht zuletzt aus herstellungstechnischer Sicht, wenn zwei diametral gegenüberliegende Umfangsteilsbereiche gehärtet sind. Es können jedoch namentlich dann, wenn die Härtung mittels Laserstrahlen erfolgt, mehr als zwei Teilbereiche gehärtet sein, die dann gleichmäßig über den Umfang der Schrauben-Funktionsspitze verteilt sind.

Die Zeichnung veranschaulicht die Erfindung an Ausführungsformen von Schrauben, und zwar zeigt
- Figur 1: in Seitenansicht eine Schraube mit einer der Gewindeformung dienenden Funktionsspitze;
- Figur 2: die in Figur 1 markierte Funktionsspitze in vergrößerter Darstellung und mit schraffierter Angabe von gehärteten Gewindegang-Bereichen;
- Figur 3a) bis c): Querschnittsvarianten gemäß III-III in Figur 1 mit schraffiert angegebenen Härtebereichen;
- Figur 4: in Seitenansicht eine andere Schraube mit einer vorbohrenden und gewindeschneidenden Funktionsspitze;
- Figur 5: eine vergrößerte Darstellung der in Figur 4 hervorgehobenen Funktionsspitze mit schraffierter Angabe von Härtezonen;
- Figur 6: einen Schnitt gemäß der Linie IV-IV in Figur 5;
- Figur 7: in Seitenansicht eine weitere Schraubenkonstruktion mit gewindelochformender Funktionsspitze;
- Figur 8: eine vergrößerte Darstellung der in Figur 7 hervorgehobenen Funktionsspitze mit schraffierter Angabe von Härtezonen;
- Figur 9: einen Schnitt gemäß der Linie IX-IX in Figur 8;
- Figur 10: eine der Figur 2 entsprechende Darstellung einer gewindeformenden Funktionsspitze mit drei (Teil-)Gewindegängen;
- Figur 11: einen Schnitt gemäß der Linie A-A in Figur 10;
- Figur 12: einen Schnitt gemäß der Linie B-B in Figur 10; und
- Figur 13: einen Schnitt gemäß der Linie C-C in Figur 10.

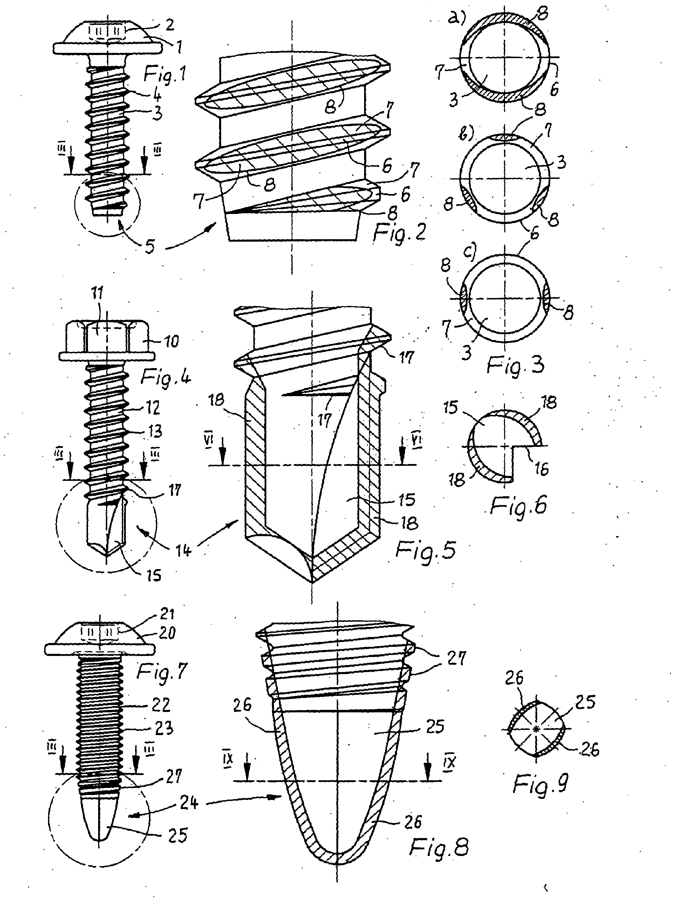

Die Schraube in Figur 1 hat einen Kopf 1 mit einem Werkzeug-Inneneingriff 2. Ihr Schaft 3 ist mit einem Gewinde 4 versehen. Im Bereich der Funktionsspitze 5 läuft der erste Gang aus und ist wie die beiden anschließenden Gewindegänge im Bereich der Spitzen 6 und Flanken 7 über Teilbereiche 8 in der erfindungsgemäßen Weise gehärtet. Die Figuren 3a) bis c) zeigen im Schnitt gemäß der Linie III-III in Figur 1 gehärtete Umfangs-Teilbereiche 8, deren schraffiert angegebene Gestaltung von der Art des angewendeten Härteverfahrens abhängig ist. So sind die Teilbereiche 8 gemäß Figur 3a) durch induktive Erwärmung bei linearem Quervorschub der Schraube durch einen Linieninduktor entstanden, während die gehärteten Teilbereiche 8 der Figuren 3b) und 3c) durch Erwärmung mittels dreier bzw. zweier Laserstrahlen erzeugt wurden.

Die Schraube gemäß Figur 4 hat einen Kopf 10 mit einem Werkzeug-Außenangriff 11 und einem Schaft 12 mit Gewinde 13. Ihre Funktionsspitze 14 hat einen Bohrabschnitt 15 mit Schneidkanten 16 sowie anschließend gewindeformende Gewindegänge 17, deren Ausbildung denjenigen der Schraube gemäß Figur 1 entspricht (vgl. Schnitt III-III in Figur 4). Die gehärteten Umfangs-Teilbereiche 18 des Bohrabschnitts 15 sind Figur 6 der Darstellung des Schnitts VI-Vi in Figur 5 zu entnehmen; ihre axiale Erstreckung ergibt sich unmittelbar aus Figur 5.

Die Schraube gemäß Figur 7 hat einen Kopf 20 mit einem Werkzeuginnenangriff 21. Ihr Schaft 22 mit dem Gewinde 23 hat eine Funktionsspitze 24 mit einem lochformenden Abschnitt 25, dessen Härtung in Umfangs-Teilbereichen 26 der Figur 9 zu entnehmen ist. Die axiale Erstreckung der Teilbereiche 26 ergibt sich aus Figur 8. Die an die lochförmende Spitze 25 anschließenden Gänge 27 des Gewindes 23 sind wiederum in Umfangs-Teilbereichen 8 so gehärtet, wie dies im Zusammenhang mit Figur 1 beschrieben wurde und den Figuren 2 und 3 zu entnehmen ist (vgl. Schnitt III-III in Figur 7).

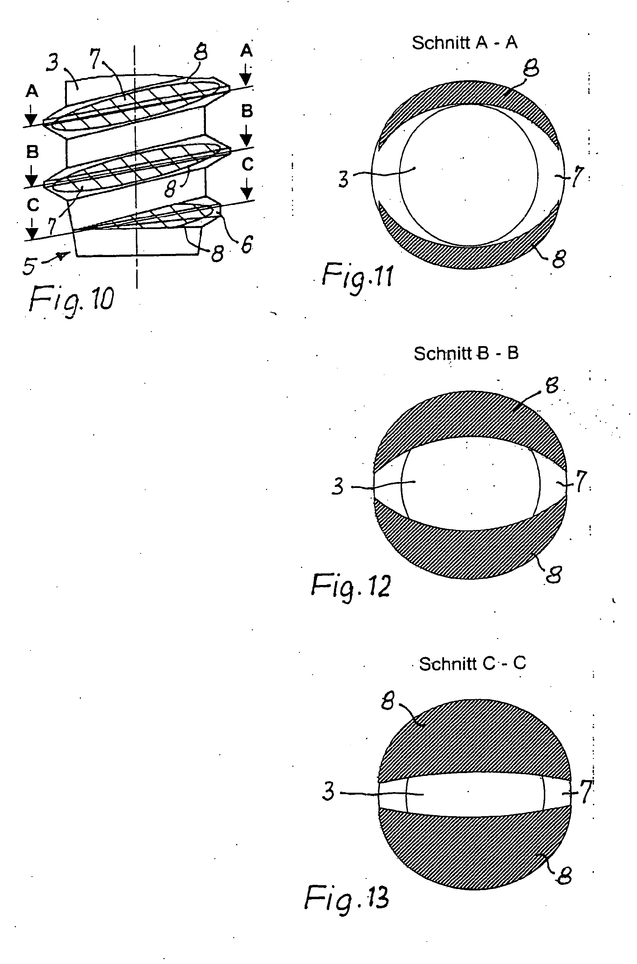

Vorteilhaft kann die erfindungsgemäße Härtung der Funktionsspitze hinsichtlich ihrer radialen Tiefe in axialer Richtung zum Beginn der Funktionsspitze hin zunehmen. Wie Figur 13 in Verbindung mit Figur 10 zeigt, ist sie im Bereich des ersten Gewindeganges am größten und nimmt zum Schraubenkopf hin bei den folgenden Gewindegängen ab (Figuren 12 und 11). Entsprechendes gilt für Funktionsspitzen mit bohrenden oder fließlochformenden Abschnitten (Figuren 4 bzw. 7). Auf diese Weise steht beim Beginn des jeweiligen Bearbeitungsvorganges die größte Härte und damit Angriffsfähigkeit der Schraube zur Verfügung.

## Patentansprüche

1. Verfahren zur Herstellung einer aus einem niedriglegierten Kohlenstoffstahl bestehenden Schraube mit einem Kopf, einem anschließenden Halteabschnitt und einer Funktionsspitze, die im Außenbereich von begrenzter radialer Tiefe einer dem Halteabschnitt gegenüber größere Härte aufweist,
wobei der Schraubenkörper durch Pressen und Walzen geformte ggf. der Schraubenkörper insgesamte Vergütet wird oder einsatzgehärtet wird und anschließend die Funktionsspitze einem Härtungsvorgang unterworfen wird,
**dadurch gekennzeichnet, dass** die Härtung durch momentanes Erwärmen bei hohem Energietransfer und anschließendem Abschrecken erfolgt sowie auf Teilbereiche des Umfangs der Funktionsspitze beschränkt wird.

2. Verfahren nach Anspruch 1,
**dadurch gekennzeichnet, dass** die radiale Tiefe der die vergrößerte Härte hervorrufenden momentanen Erwärmung in axialer Richtung vom Beginn der Funktionsspitze zum Kopf hin verringert wird.

3. Verfahren nach Anspruch 1 oder 2,
**dadurch gekennzeichnet, dass** das Erwärmen induktiv bei linearem Quervorschub der Schraube durch einen Linieninduktor erfolgt.

4. Verfahren nach Anspruch 1 oder 2,
**dadurch gekennzeichnet, dass** das Erwärmen durch Beaufschlagung mittels Laserstrahl erfolgt.

5. Verfahren nach Anspruch 4,
**dadurch gekennzeichnet, dass** mehrere Laserstrahlen auf Umfangsabschnitt der Funktionsspitze der Schraube gerichtet werden.

6. Verfahren nach einem der Ansprüche 1 bis 5,
**dadurch gekennzeichnet, dass** der Schraubenkörper vor dem Härten der Funktionsspitze insgesamt vergütet wird (Erwärmen auf Austenitisierungstemperatur, Abschrecken und Anlassen).

7. Verfahren nach einem der Ansprüche 1 bis 5,
**dadurch gekennzeichnet, dass** der Schraubenkörper vor dem Härten der Funktionsspitze insgesamt einsatzgehärtet wird (Erwärmen auf Austenitisierungstemperatur unter Aufkohlen oder Carbonitrieren, Abschrecken und Anlassen).

8. Verfahren nach einem der vorhergehenden Ansprüche,
**dadurch gekennzeichnet, dass** die Härtung auf die Spitzen, und auf Flankenabschnitte der gewindeformenden Gewindegänge der Funktionsspitze beschränkt wird.

9. Verfahren nach einem der Ansprüche 1 bis 7,
**dadurch gekennzeichnet, dass** die Härtung auf die Schneidkanten der bohrlochformenden Abschnitte der Funktionsspitze beschränkt wird.

10. Aus einem niedriglegierten Kohlenstoffstahl bestehende Schraube mit einem Kopf, einem anschließenden Halteabschnitt und einer Funktionsspitze, die im Außenbereich von begrenzter radialer Tiefe eine dem Halteabschnitt gegenüber größere Härte aufweist,
**dadurch gekennzeichnet, dass** nur Umfangsteilbereiche der Funktionsspitze gehärtet sind.

11. Schraube nach Anspruch 10,
**dadurch gekennzeichnet, dass** die radiale Tiefe der größeren Härte in axialer Richtung vom Beginn der Funktionsspitze zum Kopf hin abnimmt.

12. Schraube nach Anspruch 10 oder 11,
**dadurch gekennzeichnet, dass** zwei diametral gegenüberliegende Umfangsteilbereiche der Funktionsspitze gehärtet sind.

13. Schraube nach Anspruch 10 oder 11,
**dadurch gekennzeichnet, dass** mehr als zwei gleichmäßig über den Umfang verteilte Teilbereiche der Funktionsspitze gehärtet sind.

## Claims

1. A method for the production of a screw consisting of a low-alloy carbon steel comprising a head, an adjoining holding portion and a functional tip which, in the outer region of limited radial depth, has a greater hardness compared to the holding portion,
the screw body being shaped by pressing and rolling, optionally the screw body being heat-treated or case-hardened as a whole, and then the functional tip being subjected to a hardening process,
**characterised in that** the hardening is effected by momentary heating with a high energy transfer and subsequent quenching, and is limited to portions of the periphery of the functional tip.

2. A method according to Claim 1,
**characterised in that** the radial depth of the momentary heating producing the increased hardness is reduced in the axial direction from the start of the functional tip towards the head.

3. A method according to Claim 1 or 2,
**characterised in that** the heating is effected inductively with linear lateral feed of the screw through a line inductor.

4. A method according to Claim 1 or 2,
**characterised in that** the heating is effected by impinging with a laser beam.

5. A method according to Claim 4,
**characterised in that** several laser beams are directed onto a peripheral portion of the functional tip of the screw.

6. A method according to one of Claims 1 to 5,
**characterised in that**, prior to the hardening of the functional tip, the screw body is heat-treated as a whole (heating to austenitising temperature, quenching and tempering).

7. A method according to one of Claims 1 to 5,
**characterised in that**, prior to the hardening of the functional tip, the screw body is case-hardened as a whole (heating to austenitising temperature with carburisation or carbonitriding, quenching and tempering).

8. A method according to one of the preceding claims,
**characterised in that** the hardening is limited to the tips and flank portions of the thread-forming screw-thread turns of the functional tip.

9. A method according to one of Claims 1 to 7,
**characterised in that** the hardening is limited to the cutting edges of the borehole-forming portions of the functional tip.

10. A screw consisting of a low-alloy carbon steel comprising a head, an adjoining holding portion and a functional tip which, in the outer region of limited radial depth, has a greater hardness compared to the holding portion,
**characterised in that** only peripheral portions of the functional tip are hardened.

11. A screw according to Claim 10,
**characterised in that** the radial depth of the greater hardness decreases in the axial direction from the start of the functional tip towards the head.

12. A screw according to Claim 10 or 11,
**characterised in that** two diametrically opposite peripheral portions of the functional tip are hardened.

13. A screw according to Claim 10 or 11,
**characterised in that** more than two portions of the functional tip, distributed uniformly over the periphery, are hardened.

## Revendications

1. Procédé destiné à la réalisation d'une vis en acier au carbone faiblement allié, comportant une tête, un segment de fixation adjacent et une pointe fonctionnelle, qui, sur une profondeur radiale limitée, a dans la zone extérieure, une dureté plus élevée que celle du segment de fixation, la forme du corps de vis étant obtenue par matriçage et roulage, le cas échéant, le corps de vis étant traité ou cémenté et trempé dans son ensemble, et la pointe fonctionnelle subissant ensuite un processus de durcissement, **caractérisé en ce que** le durcissement est réalisé au moyen d'un chauffage momentané avec un transfert d'énergie élevé et d'une trempe consécutive, et se limite à des zones partielles du pourtour de la pointe fonctionnelle.

2. Procédé selon la revendication 1, **caractérisé en ce que** la profondeur radiale du chauffage momentané engendrant la dureté plus élevée diminue dans le sens axial depuis le début de la pointe fonctionnelle vers la tête.

3. Procédé selon la revendication 1 ou 2, **caractérisé en ce que** le chauffage est réalisé par induction avec une avance de la vis en sens transversal à travers un inducteur linéaire.

4. Procédé selon la revendication 1 ou 2, **caractérisé en ce que** le chauffage est effectué au moyen d'une sollicitation par un faisceau laser.

5. Procédé selon la revendication 4, **caractérisé en ce que** plusieurs faisceaux laser sont orientés sur une partie du pourtour de la pointe fonctionnelle de la vis.

6. Procédé selon l'une quelconque des revendications 1 à 5, **caractérisé en ce que** le corps de vis est traité dans son ensemble avant la trempe de la pointe fonctionnelle (chauffage à la température d'austénitisation, trempe et revenu).

7. Procédé selon l'une quelconque des revendications 1 à 5, **caractérisé en ce que** le corps de vis est cémenté et trempé dans son ensemble avant la trempe de la pointe fonctionnelle (chauffage à la température d'austénitisation avec cémentation ou carbonitruration, trempe et revenu).

8. Procédé selon l'une quelconque des revendications précédentes, **caractérisé en ce que** le durcissement est limité aux sommets et aux flancs des spires du filetage auto-taraudeuses de la pointe fonctionnelle.

9. Procédé selon l'une quelconque des revendications 1 à 7, **caractérisé en ce que** le durcissement est limité aux arêtes de coupe des parties de la pointe fonctionnelle destinées au perçage des trous.

10. Vis en acier au carbone faiblement allié comportant une tête, un segment de fixation adjacent et une pointe fonctionnelle qui, sur une profondeur radiale limitée dans la zone extérieure, a une dureté plus élevée que celle du segment de fixation, **caractérisée en ce que** seules des zones partielles du pourtour de la pointe fonctionnelle sont trempées.

11. Vis selon la revendication 10, **caractérisée en ce que** la profondeur radiale de la dureté plus élevée décroît dans le sens axial depuis le début de la pointe fonctionnelle vers la tête.

12. Vis selon la revendication 10 ou 11, **caractérisée en ce que** deux zones partielles diamétralement opposées du pourtour de la pointe fonctionnelle sont trempées.

13. Vis selon la revendication 10 ou 11, **caractérisée en ce que** plus de deux zones partielles de la pointe fonctionnelle, uniformément réparties sur le pourtour, sont trempées.
